# FASCICULE DE BREVET EUROPEEN

(11) **EP 3 738 199 B1**
(45) Date de publication et mention de la délivrance du brevet: **18.08.2021**
(21) Numéro de dépôt: 19703183.4
(22) Date de dépôt: 07.01.2019
(51) Int. Cl.: H02K 16/00, H02K 1/27, H02K 1/18, H02K 5/20, H02K 7/00, H02K 1/30, H02K 11/33, H02K 9/19, H01F 1/08, H01F 7/02

(54) **MOTEUR OU GÉNÉRATRICE ÉLECTROMAGNÉTIQUE À DEUX ROTORS ET QUATRE STATORS ET SYSTÈME DE REFROIDISSEMENT INTÉGRÉ**
ELEKTROMAGNETISCHER MOTOR ODER GENERATOR MIT ZWEI ROTOREN, VIER STATOREN UND EINEM INTEGRIERTEN KÜHLSYSTEM
ELECTROMAGNETIC MOTOR OR GENERATOR WITH TWO ROTORS, FOUR STATORS AND AN INTEGRATED COOLING SYSTEM

(30) Priorité: 09.01.2018 FR 1800022
(43) Date de publication de la demande: 18.11.2020
(73) Titulaire: Whylot, 46100 Cambes (FR)
(72) Inventeur: MIHAILA, Vasile, 46100 Figeac (FR); MAYEUR, Loic, 12300 Saint-Santin (FR); RAVAUD, Romain, 46240 Labastide-Murat (FR)
(86) Numéro de dépôt international: PCT/IB2019/050097
(87) Numéro de publication internationale: WO 2019/138308

(56) Documents cités:
- EP-A1- 2 773 023
- CN-A- 107 332 374
- DE-A1- 10 208 564
- DE-A1-102016 204 444
- FR-A1- 3 004 025
- JP-A- H08 242 557
- JP-A- 2005 143 268
- JP-A- 2009 142 095
- JP-U- 3 168 877
- KR-A- 20140 008 518
- US-A1- 2006 076 846
- US-A1- 2010 071 972
- US-A1- 2014 167 708
- US-A1- 2016 226 346
- US-A1- 2017 187 252
- US-A1- 2017 237 326

## Description

La présente invention concerne un moteur ou une génératrice électromagnétique synchrone à aimants permanents et à flux axial à deux rotors et quatre stators et système de refroidissement intégré répartis pour optimiser le refroidissement du moteur ou de la génératrice.

La présente invention trouve une application avantageuse mais non limitative pour un moteur électromagnétique délivrant une forte puissance avec une vitesse de rotation du rotor élevée, ce qui est obtenu par les caractéristiques spécifiques du rotor selon la présente invention en interaction avec les caractéristiques spécifiques du ou des stators. Un tel moteur ou génératrice peut être utilisé par exemple comme moteur électromagnétique dans un véhicule automobile totalement électrique ou hybride.

Dans des applications à haute vitesse, il est nécessaire d'avoir non seulement un système compact rendu possible par la réduction de la masse et de l'encombrement du moteur axial pour un rendement optimal, mais également une très bonne tenue mécanique de la partie tournante, c'est-à-dire le ou les rotors, afin d'améliorer la fiabilité du système mais aussi du ou des stators.

Pour une machine électromagnétique à flux radial, non objet de la présente invention, le rotor comporte un corps cylindrique dont tout le pourtour porte des aimants.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux radial pour une machine à flux radial, non objet de la présente invention.

Pour une machine électromagnétique à flux axial, le rotor comporte un corps sous forme d'un disque présentant deux faces circulaires reliées par une épaisseur, le disque étant délimité entre une couronne externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator, une seule face circulaire du corps porte des aimants tandis que pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former chaque bobinage.

Par exemple, le document US-A-2010/071972 représentant l'état de la technique le plus proche, décrit un moteur ou une génératrice électromagnétique synchrone à aimants permanents et à flux axial comportant au moins un rotor et au moins un stator avec un carter. Chaque rotor comprend des structures d'aimant formant des pôles d'aimant, les structures d'aimant s'étendant tout autour dudit au moins un rotor monté tournant autour d'un arbre médian et chaque stator comprend des bobinages.

Le moteur comporte deux rotors, quatre stators et un système de refroidissement comprenant trois circuits d'un fluide de refroidissement, avec deux circuits externes logés respectivement dans une paroi externe longitudinale du carter en étant adjacent à un stator d'extrémité pour effectuer un refroidissement dudit stator d'extrémité associé et un circuit intermédiaire disposé entre les deux stators les plus internes au moteur effectuant simultanément un refroidissement des deux stators les plus internes. L'arbre médian est commun pour les deux rotors, les deux rotors étant reliés à l'arbre médian par des moyens mécaniques.

Les aimants dans le rotor de chaque rotor de ce moteur sont des aimants de grande taille. Or, un gros aimant est sujet à des pertes par courants de Foucault plus importantes, ce qui est à éviter. De plus, la chaleur dégagée par un gros aimant est importante et nécessite un refroidissement conséquent, ce qui oblige l'utilisation d'un système de refroidissement coûteux et encombrant.

Un moteur à deux rotors et quatre stators est relativement compact et dégage une quantité de chaleur important qu'il convient d'évacuer de l'intérieur du carter du moteur qui intègre les rotors et stators.

De plus, de par les aimants de grande taille utilisés pour le rotor dans ce document, un tel rotor dissipe une grande quantité de chaleur. Cette dissipation empêche d'utiliser des moyens de maintien axial sous forme de disques de recouvrement en composite et la dissipation de chaleur peut avoir des conséquences sur la tenue de l'enrobage avec un vieillissement accéléré de cet enrobage ainsi que des aimants.

Les mêmes considérations s'appliquent à l'encontre du document US- A-2014/167708 qui décrit un générateur polyphasique à bobines multiples comprenant un arbre de transmission, au moins des premier et second rotors montés de manière rigide sur l'arbre de transmission de manière à tourner simultanément de manière synchrone avec la rotation de l'arbre de transmission, et au moins un stator pris en sandwich entre les premier et second rotors. Les aimants décrits dans ce document sont de gros aimants qui présentent les mêmes inconvénients que précédemment évoqués.

Le problème à la base de la présente invention est de concevoir un moteur ou une génératrice électrique à flux axial qui puisse évacuer efficacement la chaleur produite lors du fonctionnement du moteur ou de la génératrice.

Ce problème est résolu pour un moteur ou une génératrice électromagnétique synchrone à aimants permanents selon le préambule de la revendication 1 par les caractéristiques de la partie caractérisante de la revendication 1.

L'effet technique conféré par la présente invention est d'obtenir un refroidissement renforcé à l'intérieur du moteur en n'augmentant pas son encombrement. Un deuxième effet est de permettre un ajustement précis lors du positionnement des deux rotors sur l'arbre médian.

Il est connu de prévoir un enrobage du rotor sur l'arbre médian. Ceci n'a pas donné satisfaction car empêchant un dégagement de chaleur créée par le rotor lors de sa rotation et lors de l'échauffement des aimants. La demanderesse a constaté que des moyens mécaniques permettaient une meilleure évacuation de la chaleur hors du carter du moteur.

Un autre avantage de la présente invention est de permettre un réglage du positionnement de chaque rotor vis-à-vis de l'arbre. Ceci n'était pas possible avec un rotor enrobé sur l'arbre médian. Or un tel réglage, s'il est suffisamment précis, peut permettre de réduire le couple de détente. Ceci peut être fait en décalant angulairement radialement un rotor par rapport à l'autre. Chacune des structures d'aimants d'un rotor n'est plus alignée axialement avec une structure d'aimants respective de l'autre rotor. Il s'est avéré que cela procurait un grand bénéfice en ce qui concerne la diminution du couple de détente.

Prévoir un seul circuit de refroidissement pour les deux stators intermédiaires et leur rotor associé permet une économie de place et un coût moindre plutôt que prévoir deux systèmes de refroidissement séparés. Il est possible d'augmenter la taille des conduites de refroidissement ou le débit du fluide de refroidissement pour garantir un refroidissement efficace dans la portion la plus interne du moteur.

Il est ainsi créé une synergie entre le système de refroidissement et les moyens mécaniques de solidarisation du rotor sur l'arbre médian. Les moyens mécaniques permettent de diminuer à la fois la chaleur créée à l'intérieur du moteur et le couple de détente, ce qui permet de simplifier le système de refroidissement en ne prévoyant qu'un seul circuit de refroidissement intermédiaire ou de diminuer la taille du circuit de refroidissement.

Selon l'invention, il est proposé de remplacer un ou plusieurs aimants de taille importante par une pluralité de petits aimants. Il y a donc une création de flux magnétique par une multitude de petits aimants dont le nombre peut être d'au moins 20 et peut même dépasser 100 par pôle aimant. Un rotor de l'état de la technique pouvait comprendre de 1 à 10 aimants alors que la présente invention prévoit beaucoup plus d'aimants de petite taille dans chaque structure d'aimant.

Il convient de ne pas confondre une structure d'aimant, un rotor pouvant en porter par exemple de cinq à dix voire plus, avec les aimants unitaires qui sont nettement plus nombreux, un rotor pouvant en porter par exemple plusieurs centaines. Les petits aimants unitaires selon la présente invention peuvent être insérés dans des alvéoles respectives par un robot.

Ceci permet d'obtenir un rotor qui, entre autres avantages, peut tourner à grande vitesse et qui ne comprend pas de fer, ce qui limite les pertes rotoriques.

Selon l'invention, il a été découvert qu'une pluralité d'aimants unitaires donne une structure d'aimant plus résistante au niveau de la flexion globale du rotor tout en produisant très peu de chaleur du fait des faibles pertes générées, la chaleur dissipée par les aimants unitaires étant moindre que la chaleur dissipée par un aimant plus grand d'un seul tenant leur correspondant.

La structure d'aimant comporte une couche de composite non conductrice enrobant les aimants unitaires, le cas échéant placés dans un maillage. De plus, sa résistance mécanique peut être élevée et l'enrobage peut se faire aisément notamment par injection du composite sur une disposition d'aimants unitaires maintenus en place les uns par rapport aux autres par un moyen quelconque.

Avec un tel rotor, il est avantageux d'associer deux stators comprenant des dents en fer avec des bobinages concentriques, ce qui est facile à réaliser.

Il est possible d'utiliser différents types de matériaux pour les aimants unitaires sélectionnés par exemple entre des alliages samarium-cobalt (Sm-Co), des alliages d'aluminium, de nickel et de cobalt, des ferrites dures et des matériaux Néodyme-Fer-Bore, l'important étant que ces matériaux supportent d'être usinés en plots de petite largeur ou de petit diamètre comparé à leur longueur.

Avantageusement, le circuit intermédiaire est logé dans une paroi intermédiaire du carter s'étendant radialement à l'arbre médian commun. Le circuit intermédiaire est alors intégré dans le carter comme les circuits externes.

Avantageusement, la paroi intermédiaire comporte deux portions s'étendant radialement à l'arbre médian commun, chaque portion étant solidarisée respectivement à un des deux stators les plus internes au moteur par des moyens de solidarisation amovible. Ceci permet de garantir la solidité de l'ensemble du moteur par cet élément radial à l'arbre faisant partie du carter en étant attaché d'un côté à un premier stator intermédiaire et de l'autre côté au second stator intermédiaire.

Avantageusement, les structures d'aimant portées par un des deux rotors sont décalées radialement d'un angle prédéterminé par rapport aux structures d'aimant portées par l'autre rotor, les moyens mécaniques étant aptes à ajuster précisément le décalage des structures d'aimants d'un rotor par rapport à l'autre rotor lors du montage des rotors sur l'arbre médian.

Ceci permet une diminution du couple de détente et ne peut être effectué que si le positionnement d'un rotor vis-à-vis de l'arbre médian est précis et avantageusement modifiable.

Avantageusement, une frette entoure la couche d'enrobage externe sur sa périphérie externe la plus éloignée de l'arbre médian.

Avantageusement, les aimants unitaires sont constitués de plots d'aimants élémentaires avec un maillage, les aimants unitaires étant liés par une résine les séparant ou insérés chacun dans un logement respectif délimité par une des mailles du maillage.

Le maillage, avantageusement en composite, maintient les aimants unitaires en place, ce qui concourt à la résistance du rotor. Le rotor à aimants placés dans des alvéoles de la présente invention est conçu de façon à réduire les pertes dans le rotor avec des moyens de solidarisation permettant de maintenir les aimants et de pallier l'effet de la force axiale ou radiale et de la force centrifuge à très haute vitesse.

Comparé à l'état de la technique, le rotor selon l'invention peut convenir à des aimants qui ne sont pas directement solidarisés entre eux alors que selon l'état de la technique les aimants nécessitent une pièce moulée formant structure de support. Ainsi, la présente invention donne une solution qui convient à toute forme de disposition des aimants sur le rotor.

La combinaison des formes des aimants et des moyens de maintien des aimants uniquement réalisés par un enrobage en composite permet de réduire les pertes dans le rotor et donc réchauffement et de minimiser le risque de démagnétisation des aimants.

Il peut donc y avoir au moins deux enrobages successifs concourant à la solidité du rotor, un enrobage de la structure d'aimant entourant aussi les aimants unitaires et un enrobage de l'ensemble des structures d'aimant.

Comme la présente invention utilise une multitude d'aimants unitaires remplaçant un aimant compact de l'état de la technique, la dissipation de chaleur est moindre et des disques de recouvrement sont utilisés comme moyens de maintien axial, ces disques remplaçant avantageusement des moyens de maintien axial entre aimants et corps du rotor, nécessitant le cas échéant des modifications des aimants ou de leur enrobage pour réaliser des moyens complémentaires de fixation avec des moyens de fixation portés par le rotor. La taille du système de refroidissement peut être en conséquence réduite.

Avantageusement, le maillage est en forme de nid d'abeille. Un maillage en nid d'abeille est connu pour renforcer la résistance d'un élément, dans le cas présent une structure d'aimant. Les aimants unitaires sont insérés dans des logements avantageusement hexagonaux qui assurent leur maintien. Les parois des logements servent d'isolant électrique et la densité des logements dans la structure d'aimant peut être considérablement augmentée. Le maillage en nid d'abeille peut être en matériau composite isolant renforcé de fibres.

Avantageusement, chaque stator comprend des bobinages concentriques en comportant une série de dents avec des bobinages enroulés autour de chaque dent, les dents étant solidarisées entre elles.

La présente invention accomplit la démarche inverse de la démarche suivie par beaucoup de fabricants de moteurs et de génératrices électromagnétiques. Il était connu de faire porter l'effort d'innovation sur les stators en concevant des bobinages de plus en plus complexes et difficiles à concevoir.

Inversement, la démarche inventive de la présente invention s'est portée principalement sur un rotor ne contenant pas de fer et enrobé par du composite en contenant des structures d'aimant faites chacune d'une pluralité d'aimants. Ceci a permis d'utiliser un bobinage concentrique pour les stators, alors qu'un tel bobinage concentrique ne donnait pas toute satisfaction avec des aimants permanents d'un seul tenant comme l'employait l'état de la technique le plus proche.

Il s'est avéré que l'utilisation d'une telle association d'un rotor composite avec au moins un stator en fer comportant des dents ou plots en fer et un bobinage concentrique pour le stator procurait une synergie en ce qui concerne la puissance du moteur ou de la génératrice utilisée ainsi que la facilité de fabrication et la résistance mécanique du moteur ou la génératrice. Il en va de même pour une réduction de son échauffement.

Avantageusement, chaque bobinage repose sur une dent en entourant au moins partiellement un support de bobinage, chaque support de bobinage comprenant ou étant associé à des moyens d'encliquetage coopérant avec des moyens d'encliquetage complémentaires portés par une dent associée au support de bobinage afin que le support de bobinage soit solidarisé avec la dent associée.

L'effet technique obtenu par ce mode de réalisation préférentielle est une facilité de montage des bobinages qui valorisent encore plus l'emploi de bobinage concentrique pour un moteur ou génératrice électromagnétique, ce qui permet d'amplifier leur utilisation. L'encliquetage se fait facilement et permet un maintien ferme du bobinage sur la dent en faisant obstacle à une sortie du bobinage d'une insertion sur la dent.

Avantageusement, le support de bobinage comprend une portion intermédiaire sur laquelle est enroulé le bobinage et une portion de recouvrement plane se trouvant la plus éloignée de la dent associée en position de solidarisation du support de bobinage sur la dent en étant séparée de la dent par le bobinage et la portion intermédiaire, la portion de recouvrement plane présentant un contour externe recouvrant à distance au moins un pourtour externe en vis-à-vis du bobinage et en faisant butée contre le pourtour externe du bobinage, le support de bobinage étant d'un seul tenant ou non.

C'est la portion de recouvrement plane par son contour externe qui fait obstacle contre une sortie du bobinage d'une insertion autour de la dent. La portion intermédiaire peut présenter des rainures correspondant à la dimension du fil électrique à bobiner pour un enroulement facilité du bobinage.

Avantageusement, les bobinages des stators sont concentriques et sont connectés à l'extérieur du moteur dans un bornier, soit en série ou en parallèle.

Avantageusement, l'arbre médian porte une série de cannelures longitudinales à l'arbre médian localement sur chaque portion de l'arbre médian destinée à recevoir respectivement un des deux rotors, chaque rotor portant un évidement central présentant un diamètre interne correspondant au diamètre externe de l'arbre médian avec un jeu juste suffisant pour une introduction de l'arbre médian dans l'évidement central, un contour de l'évidement central portant intérieurement une série complémentaire de cannelures coopérant avec la série de cannelures portées par l'arbre médian pour former les moyens mécaniques reliant les deux rotors à l'arbre, une cannelure de la série complémentaire s'insérant entre deux cannelures de la série portée par l'arbre médian.

Il se peut que l'évidement porte directement des cannelures auquel cas son contour interne est sensiblement de même dimension que le contour externe de l'arbre mais il se peut aussi qu'une pièce intermédiaire à l'intérieur de l'évidement porte les cannelures, auquel cas le contour interne de l'évidement est supérieur au contour externe de l'arbre, le contour interne de la pièce correspondant au contour externe de l'arbre. Ce qui a été énoncé plus haut doit être entendu avec évidement et pièce intermédiaire quand celle-ci est présente pour le contour interne de l'ensemble évidement et pièce intermédiaire.

La coopération de séries de cannelures sur l'arbre médian et le rotor s'insérant les unes entre les autres permet un positionnement angulaire radial précis du rotor. Il est alors possible d'effectuer un décalage angulaire pris dans un plan radial à l'arbre médian entre les deux rotors, ce qui concourt à diminuer le couple de détente.

Avantageusement, l'évidement central du rotor est porté par une couronne solidarisée au rotor associé par des moyens de fixation amovible, l'évidement étant prolongé par ou logeant un manchon cannelé. Le manchon cannelé assure une surface de contact plus grande avec les cannelures portées par l'arbre médian.

Avantageusement, le moteur intègre des moyens électroniques de commande et de puissance à une extrémité longitudinale du carter, un des deux circuits externes logé dans une paroi externe longitudinale du carter assurant aussi un refroidissement des moyens électroniques de commande et de puissance.

L'effet technique obtenu par ce mode de réalisation préférentielle est de combiner les moyens de refroidissement du moteur ou de la génératrice avec les moyens de refroidissement des moyens électroniques de commande et de puissance, ce qui représente une économie de moyens, une diminution de coût et un encombrement moindre pour l'ensemble moteur et moyens électroniques. Les moyens électroniques de commande et de puissance sont proches du moteur et bénéficie de son système de refroidissement par circuit d'un fluide caloporteur.

Un capot peut prolonger axialement le carter en entourant et protégeant les moyens électroniques de commande et de puissance du moteur. Le carter et le capot forment un ensemble fermé regroupant en son intérieur les deux rotors, les quatre stators et les moyens électroniques de commande et de puissance.

D'autres caractéristiques, buts et avantages de la présente invention apparaîtront à la lecture de la description détaillée qui va suivre et au regard des dessins annexés donnés à titre d'exemples non limitatifs et sur lesquels :

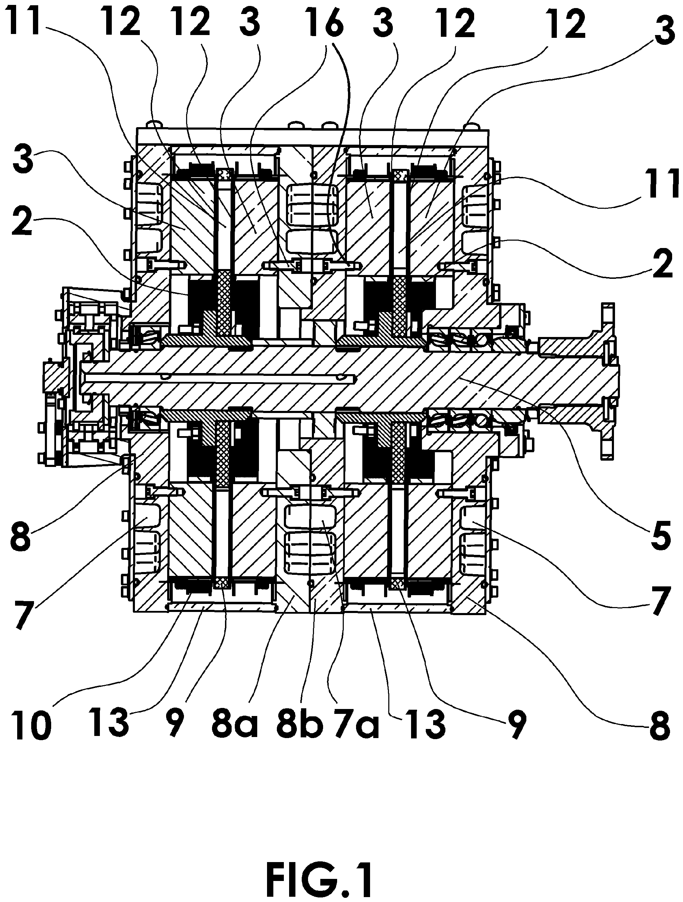

- la figure 1 est une représentation schématique d'une vue en coupe longitudinale d'un mode de réalisation du moteur selon la présente invention,

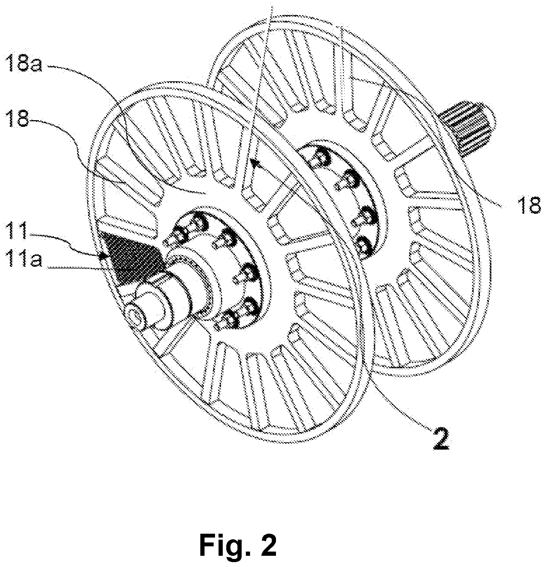

- la figure 2 est une représentation schématique d'une vue en perspective de deux rotors positionnés sur un arbre médian commun faisant partie du moteur ou de la génératrice conforme à un mode de réalisation selon la présente invention,

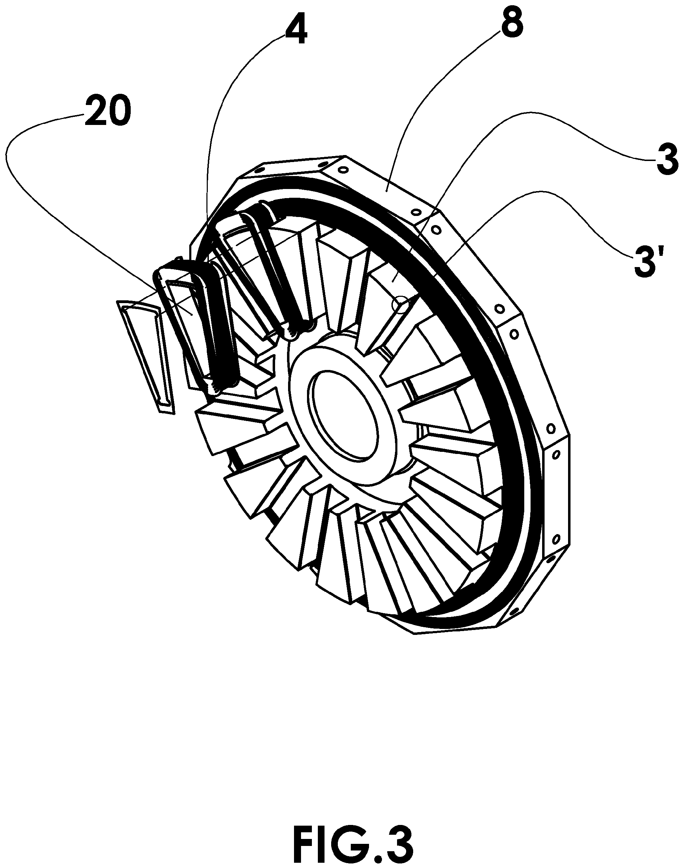

- la figure 3 est une représentation schématique d'une vue en perspective d'un stator comprenant des dents et des bobinages montés sur une dent respective, le stator faisant partie d'un moteur selon un mode de réalisation conforme à la présente invention en incorporant un support de bobinage s'encliquetant sur la dent, deux supports de bobinage étant montrés à cette figure 3,

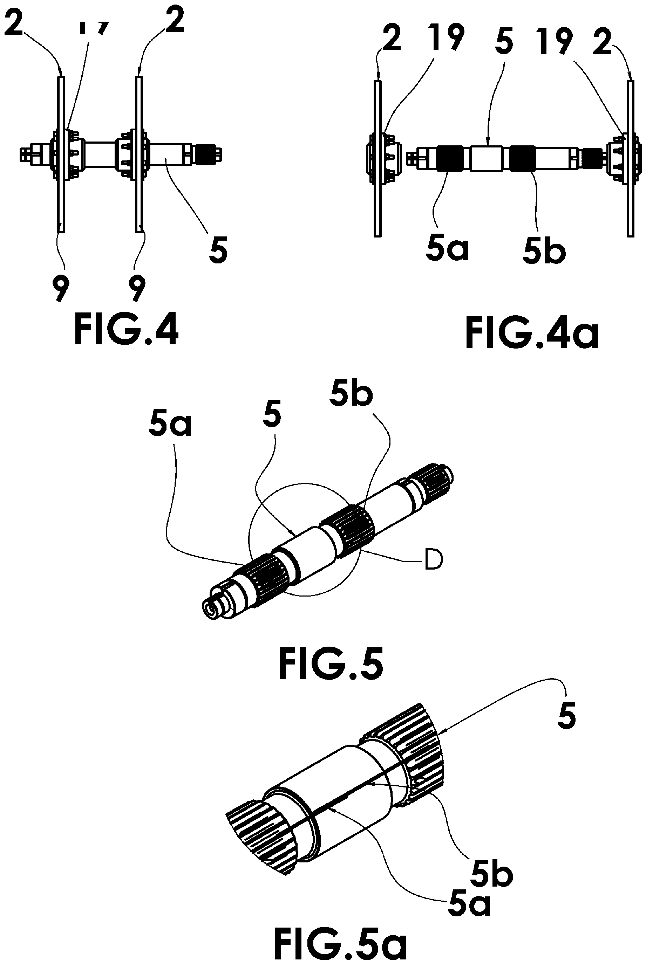

- les figures 4 et 4a sont des représentations schématiques d'une vue latérale d'un arbre médian commun supportant deux rotors faisant partie du moteur ou de la génératrice selon un mode de réalisation conforme à la présente invention, les rotors n'étant pas positionnés sur l'arbre à la figure 4a,
- les figures 5 et 5a sont des représentations schématiques d'une vue en perspective d'un arbre médian commun supportant du moteur ou de la génératrice selon un mode de réalisation conforme à la présente invention, une portion de l'arbre médian commun étant montrée agrandie à la figure 5a pour bien montrer un décalage entre deux séries de cannelures destinées à servir de moyens mécaniques de solidarisation d'un rotor respectif,

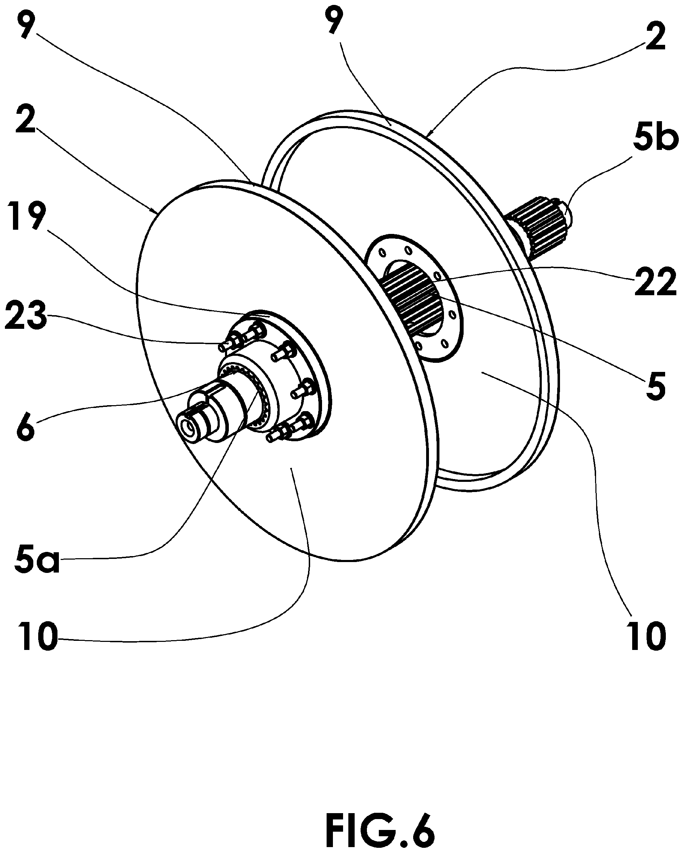

- la figure 6 est une représentation schématique d'une vue en perspective de deux rotors positionnés sur un arbre médian commun faisant partie du moteur ou de la génératrice conforme à un mode de réalisation selon la présente invention, cette figure montrant notamment les moyens mécaniques complémentaires de solidarisation d'un rotor sur l'arbre médian commun.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différentes pièces ne sont pas représentatives de la réalité.

Dans ce qui va suivre, toutes les figures montrent un moteur ou une génératrice électromagnétique synchrone à aimants permanents et à flux axial.

L'adjectif longitudinal est à prendre en référence à l'arbre médian 5 traversant les rotors 2.

A la figure 3, une seule dent 3 est référencée mais ce qui est énoncé pour cette dent 3 référencée est valable pour toutes les autres dents 3 du stator 3, 8. A la figure 2, un seul aimant unitaire 11a est référencé pour une structure d'aimant 11 mais ce qui est énoncé pour ce seul aimant unitaire 11a référencé est valable pour tous les aimants unitaires du rotor 2. De plus, à la figure 2, une seule structure d'aimant 11 est représentée. Il en va de même pour les cannelures 5a, 5b sur l'arbre médian et les cannelures 6 sur les rotors.

En se référant à toutes les figures et notamment à la figure 1, la présente invention concerne un moteur ou génératrice électromagnétique synchrone à aimants permanents comportant au moins deux rotors 2 et au moins quatre stators 3, 8 avec un carter 8.

Chacun des deux rotors 2 comprend des structures d'aimant 11 formant des pôles d'aimant. Les structures d'aimant 11 s'étendent 3 tout autour dudit au moins un rotor 2 monté tournant autour d'un arbre médian 5. Chacun des quatre stators 3, 8 comprend des bobinages 4.

Le moteur ou la génératrice comporte un système de refroidissement 7, 7a comprenant trois circuits d'un fluide de refroidissement, avantageusement de l'eau ou à base d'eau mais ceci n'est pas limitatif.

Deux circuits externes 7 sont logés respectivement dans une paroi externe longitudinale du carter 8 en étant adjacent à un stator 3, 8 d'extrémité pour effectuer un refroidissement dudit stator 3, 8 d'extrémité associé.

Le système de refroidissement 7, 7a comprend un circuit intermédiaire 7a disposé entre les deux stators 3, 8 les plus internes au moteur effectuant simultanément un refroidissement des deux stators 3, 8 les plus internes, l'arbre médian 5 étant commun pour les deux rotors 2, les deux rotors 2 étant reliés à l'arbre médian 5 par des moyens mécaniques 5a, 5b, 6. La référence 5a s'applique à des moyens mécaniques de l'arbre médian 5 commun associés à un premier rotor portant des moyens mécaniques complémentaires 6 et la référence 5b s'applique à des moyens mécaniques de l'arbre médian 5 commun associés à un deuxième rotor.

Comme il est visible à la figure 1, le circuit intermédiaire 7a peut être logé dans une paroi intermédiaire 8a, 8b du carter 8 s'étendant radialement à l'arbre médian 5 commun. Cette paroi intermédiaire 8a, 8b contribue à la solidité du carter 8 ainsi qu'au logement du circuit intermédiaire 7a du système de refroidissement 7, 7a, ce qui est une double fonction procurant un gain de place et de matière.

Toujours en se référant principalement à la figure 1, la paroi intermédiaire 8a, 8b peut comporter deux portions 8a, 8b s'étendant radialement à l'arbre médian 5 commun. Chaque portion 8a, 8b peut être solidarisée respectivement à un des deux stators 3, 8 les plus internes au moteur par des moyens de solidarisation amovible 16. Ces moyens de solidarisation amovible 16 sont sous la forme de vis de fixation à la figure 1.

La référence 13 indique une virole reliant les parois extérieures d'extrémité longitudinale du carter 8 à la paroi intermédiaire 8a, 8b, une virole étant prévue de chaque côté de la paroi intermédiaire 8a, 8b. Entre chaque stator 3, 8 et chaque rotor 2, il existe un entrefer 12.

Comme il est montré à la figure 2 pour une seule structure d'aimant 11, chaque structure d'aimant 11 est composée d'une pluralité d'aimants unitaires 11a au lieu d'un unique et seul gros aimant. La structure d'aimant 11 ainsi obtenue peut être sous la forme d'un pavé de section quadrangulaire ou triangulaire.

Pour empêcher un déplacement axial des structures d'aimant 11, des disques de recouvrement 10 sont disposés axialement sur chacune de deux faces axiales opposées de chaque rotor 2 en recouvrant les structures d'aimant 11. Ceci remplace avantageusement des moyens mécaniques 5a, 6 de maintien axial et a été rendu possible par une diminution de la chaleur dégagée par chaque structure d'aimant 11 comparée à la chaleur dégagée par un gros aimant correspondant. Il était courant que les disques de recouvrement 10 brûlent quand utilisés avec de gros aimants, ce qui n'est plus le cas avec les aimants unitaires 11a décrits la présente demande.

Les disques de recouvrement 10 sont en composite. Les structures d'aimant 11 sont enrobées dans une couche d'enrobage externe de composite définissant le contour extérieur de chacun des rotors 2. Dans deux alternatives possibles, les disques de recouvrement 10 sont enrobés dans la couche d'enrobage externe de composite ou placés sur une face axiale respective de la couche d'enrobage externe.

Une frette 9 peut entourer la couche d'enrobage externe sur sa périphérie externe la plus éloignée de l'arbre médian 5. Le rotor 2 peut ainsi présenter une couronne externe périphérique formant sa tranche, la frette 9 étant réalisée sur une couronne externe périphérique en permettant de retenir les aimants unitaires 11a et les structures d'aimant 11 contre une force centrifuge.

Les aimants unitaires 11a peuvent être constitués de plots d'aimants élémentaires avantageusement hexagonaux avec un maillage, les aimants unitaires 11a étant liés par une résine les séparant ou insérés chacun dans un logement respectif délimité par une des mailles du maillage.

Chaque plot 11 a est de forme allongée pénétrant en longueur dans son logement associé s'étendant selon l'épaisseur de la structure d'aimant 11. Sans que cela soit limitatif, le plot allongé peut être cylindrique ou sous forme d'un polyèdre avec au moins une face longitudinale plane.

Le maillage peut être en forme de nid d'abeille. Dans ce cas, quand ledit au moins un maillage est sous forme d'un nid d'abeille, chaque plot peut présenter une face longitudinale de forme hexagonale.

A la figure 2, le rotor 2 comprend des branches 18 séparant les structures d'aimant 11 adjacentes. Les branches 18 peuvent s'étendre radialement en partant d'un moyeu 18a formant la partie centrale du rotor 2. Ceci n'est pas limitatif et l'écartement entre les structures d'aimant peut seulement être réalisé par la couche d'enrobage externe en composite.

En se référant plus particulièrement à la figure 3, chaque stator 3, 8 comprend des bobinages 4 concentriques en comportant une série de dents 3 avec des bobinages 4 enroulés autour de chaque dent, les dents 3 étant solidarisées entre elles.

Comme montré notamment à cette figure 3, chaque bobinage 4 peut reposer sur une dent 3 en entourant au moins partiellement un support de bobinage. Chaque support de bobinage peut comprendre ou être associé à des moyens d'encliquetage 15' portés par une pièce coopérant avec des moyens d'encliquetage complémentaires 3' portés par une dent 3 associée au support de bobinage afin que le support de bobinage soit solidarisé avec la dent 3 associée. Cela implique qu'au moins une portion du support de bobinage soit insérée autour de la dent 3.

L'encliquetage peut se faire directement entre le support de bobinage et la dent 3 auquel cas chaque support de bobinage porte les moyens d'encliquetage 15' ou entre une pièce intermédiaire 15 solidarisée au support de bobinage et la dent 3, auquel cas chaque support de bobinage est associé à des moyens d'encliquetage 15' que le support de bobinage ne porte pas. Ce dernier cas est illustré à la figure 3.

Comme il peut notamment être vu à la figure 3, le support de bobinage peut comprendre une portion intermédiaire 20 sur laquelle est enroulé le bobinage 4. Le support de bobinage peut comprendre une portion de recouvrement plane, avantageusement creuse, se trouvant la plus éloignée de la dent 3 associée en position de solidarisation du support de bobinage sur la dent 3 en étant séparée de la dent 3 par le bobinage 4 et la portion intermédiaire 20

La portion de recouvrement plane peut présenter un contour externe recouvrant à distance au moins un pourtour externe en vis-à-vis du bobinage 4 et en faisant butée contre le pourtour externe du bobinage, le support de bobinage étant d'un seul tenant ou non. La portion de recouvrement peut faire butée contre une sortie du bobinage 4 d'autour de la dent 3 et d'autour de la portion intermédiaire 20.

A distance signifie que la portion de recouvrement plane n'est pas en appui sur la face de la dent 3 tournée vers le bobinage 4 et recouvrir signifie que la portion de recouvrement plane cache la face de la dent 3 tournée vers le bobinage 4 quand vue de face. Recouvrir au moins signifie que la surface de la portion de recouvrement plane peut être plus grande que la surface de la dent 3 tournée vers le bobinage 4. Il peut y avoir un espace vide dans la portion de recouvrement.

A la figure 3, c'est une pièce intermédiaire 15 solidarisée au support de bobinage qui effectue l'encliquetage. Cette pièce intermédiaire 15 porte des formes d'encliquetage 15' coopérant avec une rainure 3' respective en tant que forme d'encliquetage complémentaire portée par les bords de la face en vis-à-vis de la dent 3 associée.

Les bobinages 4 des stators 3, 8 peuvent être avantageusement concentriques et peuvent être connectés à l'extérieur du moteur dans un bornier, soit en série ou en parallèle.

Comme montré plus particulièrement aux figures 4, 4a, 5, 5a et 6, en tant que moyens mécaniques 5a, 5b, 6 de solidarisation de chaque rotor 2 à l'arbre médian 5, l'arbre médian 5 peut porter une série de cannelures 5a, 5b longitudinales à l'arbre médian 5 localement sur chaque portion de l'arbre médian 5 destinée à recevoir respectivement un des deux rotors 2.

Un contour d'un évidement 22 du rotor 2 porte une série de cannelures 6, ceci directement ou en logeant intérieurement une pièce portant la série de cannelures 6. Ces moyens mécaniques 5a, 5b, 6 permettent une grande précision pour les positionnements angulaires dans un plan radial des rotors 2 solidarisés à l'arbre de maintien.

Ainsi, comme montré aux figures 5 et 5a prises en combinaison avec la figure 2, les structures d'aimant 11 portées par un des deux rotors 2 peuvent être décalées radialement d'un angle prédéterminé par rapport aux structures d'aimant 11 portées par l'autre rotor 2, les moyens mécaniques 5a, 5b, 6 étant aptes à ajuster précisément le décalage des structures d'aimant 11 d'un rotor 2 par rapport à l'autre rotor 2.

Comme montré plus particulièrement à la figure 6, chaque rotor 2 peut présenter un évidement 22 central présentant un diamètre interne, ceci pris directement ou avec une pièce intercalaire 14 logée dans l'évidement 22 lui réduisant son diamètre interne, correspondant au diamètre externe de l'arbre médian 5 avec un jeu juste suffisant pour une introduction de l'arbre médian 5 dans l'évidement 22 central avec ou sans pièce intercalaire 14.

Un bord de l'évidement 22 central ou de la pièce intercalaire 14 insérée dans l'évidement 22 peut porter sur son pourtour interne, comme deuxième partie des moyens mécaniques 5a, 5b, 6 complémentaires à la première partie, une série complémentaire de cannelures 6 à la série de cannelures 5a, 5b portées par l'arbre médian 5 qui peuvent coopérer ensemble pour former les moyens mécaniques 5a, 5b, 6 reliant les deux rotors 2 à l'arbre.

En position montée d'un rotor 2, une cannelure 6 de la série complémentaire peut s'insérer entre deux cannelures de la série portée par l'arbre médian 5 et inversement.

Comme montré à la figure 5a qui est un agrandissement de la figure 5, une cannelure 5a de la première série de la première série de cannelures de l'arbre médian 5 associée à un premier rotor 2 n'est pas alignée avec une cannelure 5b de la deuxième série de cannelures de l'arbre médian associée à un deuxième rotor. Ceci peut être vu en prolongeant les deux cannelures 5a et 5b l'une vers l'autre comme indiqué à la figure 5a.

Comme montré plus particulièrement à la figure 6, l'évidement 22 central est entourée par ou comprend une pièce sous forme de couronne 19 solidarisée au rotor 2 associé par des moyens de fixation 23 amovibles. L'évidement 22 peut être prolongé par ou loger un manchon cannelé 14 solidaire de la couronne 19 en étant d'un seul tenant avec la couronne 19 ou en étant solidarisé de manière amovible avec la couronne 19.

Par la présence de ce manchon cannelé 14 entre le bord de l'évidement 22 et l'arbre médian 5, le diamètre interne de l'ensemble formé par l'évidement 22 et le manchon cannelé 14 est réduit et est sensiblement équivalent au diamètre externe de l'arbre médian 5.

Bien que non montré aux figures mais en se référant à la figure 1 pour les éléments montrés à la figure 1 et repris dans ce mode de réalisation, le moteur peut intégrer des moyens électroniques de commande et de puissance à une extrémité longitudinale du carter 8.

Un des deux circuits externes 7 logé dans une paroi externe longitudinale du carter 8, situé du côté du moteur où se trouvent les moyens électroniques de commande logés avantageusement dans un boîtier contiguë au carter 8 du moteur ou dans le prolongement du carter 8 peut alors assurer aussi un refroidissement des moyens électroniques de commande et de puissance en plus d'assurer le refroidissement d'un stator 3, 8 d'extrémité.

## Revendications

1. Moteur ou génératrice électromagnétique synchrone à aimants permanents et à flux axial comportant au moins un rotor (2) et au moins un stator (3, 8) avec un carter (8), ledit au moins un rotor (2) comprenant des structures d'aimant (11) formant des pôles d'aimant, les structures d'aimant (11) s'étendant tout autour dudit au moins un rotor (2) monté tournant autour d'un arbre médian (5) et ledit au moins un stator (3, 8) comprenant des bobinages (4), le moteur comportant deux rotors (2), quatre stators (3, 8) et un système de refroidissement (7, 7a) comprenant trois circuits (7, 7a) d'un fluide de refroidissement, avec deux circuits externes (7) logés respectivement dans une paroi externe longitudinale du carter (8) en étant adjacent à un stator (3, 8) d'extrémité pour effectuer un refroidissement dudit stator (3, 8) d'extrémité associé et un circuit intermédiaire (7a) disposé entre les deux stators (3, 8) les plus internes au moteur effectuant simultanément un refroidissement des deux stators (3, 8) les plus internes, l'arbre médian (5) étant commun pour les deux rotors (2), les deux rotors (2) étant reliés à l'arbre médian (5) par des moyens mécaniques (5a, 5b, 6), **caractérisé en ce que** chaque structure d'aimant (11) est composée d'une pluralité d'aimants unitaires (11a), des disques de recouvrement (10) des structures d'aimant (11) étant disposés axialement sur chacune de deux faces axiales opposées de chaque rotor (2), les disques de recouvrement (10) étant en composite, les structures d'aimant (11) étant enrobées dans une couche d'enrobage externe de composite définissant le contour extérieur de chacun des rotors (2), les disques de recouvrement (10) étant enrobés dans la couche d'enrobage externe de composite ou placés sur une face axiale respective de la couche d'enrobage externe.

2. Moteur selon la revendication précédente, dans lequel le circuit intermédiaire (7a) est logé dans une paroi intermédiaire (8a, 8b) du carter (8) s'étendant radialement à l'arbre médian (5) commun.

3. Moteur selon la revendication précédente, dans lequel la paroi intermédiaire (8a, 8b) comporte deux portions (8a, 8b) s'étendant radialement à l'arbre médian (5) commun, chaque portion (8a, 8b) étant solidarisée respectivement à un des deux stators (3, 8) les plus internes au moteur par des moyens de solidarisation amovible (16).

4. Moteur selon l'une quelconque des revendications précédentes, dans lequel les structures d'aimant (11) portées par un des deux rotors (2) sont décalées radialement d'un angle prédéterminé par rapport aux structures d'aimant (11) portées par l'autre rotor (2), les moyens mécaniques (5a, 5b, 6) étant aptes à ajuster précisément le décalage des structures d'aimant (11) d'un rotor (2) par rapport à l'autre rotor (2) lors du montage des rotors sur l'arbre médian (5).

5. Moteur selon l'une quelconque des revendications précédentes, dans lequel une frette (9) entoure la couche d'enrobage externe sur sa périphérie externe la plus éloignée de l'arbre médian (5).

6. Moteur selon l'une quelconque des revendications précédentes, dans lequel les aimants unitaires (11a) sont constitués de plots d'aimants élémentaires avec un maillage, les aimants unitaires (11a) étant liés par une résine les séparant ou insérés chacun dans un logement respectif délimité par une des mailles du maillage.

7. Moteur selon la revendication précédente, dans lequel le maillage est en forme de nid d'abeille.

8. Moteur selon l'une quelconque des revendications précédentes, dans lequel chaque stator (3, 8) comprend des bobinages (4) concentriques en comportant une série de dents (3) avec des bobinages (4) enroulés autour de chaque dent, les dents (3) étant solidarisées entre elles.

9. Moteur selon la revendication précédente, dans lequel chaque bobinage (4) repose sur une dent (3) en entourant au moins partiellement un support de bobinage, chaque support de bobinage comprenant ou étant associé à des moyens d'encliquetage (15') coopérant avec des moyens d'encliquetage complémentaires (3') portés par une dent (3) associée au support de bobinage afin que le support de bobinage soit solidarisé avec la dent (3) associée.

10. Moteur selon la revendication précédente, dans lequel le support de bobinage comprend une portion intermédiaire (20) sur laquelle est enroulé le bobinage (4) et une portion de recouvrement plane se trouvant la plus éloignée de la dent (3) associée en position de solidarisation du support de bobinage sur la dent (3) en étant séparée de la dent (3) par le bobinage (4) et la portion intermédiaire (20), la portion de recouvrement plane présentant un contour externe recouvrant axialement à distance au moins un pourtour externe en vis-à-vis du bobinage (4) et en faisant butée contre le pourtour externe du bobinage, le support de bobinage étant d'un seul tenant ou non.

11. Moteur selon l'une quelconque des trois revendications précédentes, dans lequel les bobinages (4) des stators (3, 8) sont concentriques et sont connectés à l'extérieur du moteur dans un bornier, soit en série ou en parallèle.

12. Moteur selon l'une quelconque des revendications précédentes, dans lequel l'arbre médian (5) porte une série de cannelures (5a, 5b) longitudinales à l'arbre médian (5) localement sur chaque portion de l'arbre médian (5) destinée à recevoir respectivement un des deux rotors (2), chaque rotor (2) portant un évidement (22) central présentant un diamètre interne correspondant au diamètre externe de l'arbre médian (5) avec un jeu juste suffisant pour une introduction de l'arbre médian (5) dans l'évidement (22) central, l'évidement (22) central portant intérieurement une série complémentaire de cannelures (6) coopérant avec la série de cannelures (5a, 5b) portées par l'arbre médian (5) pour former les moyens mécaniques (5a, 5b, 6) reliant les deux rotors (2) à l'arbre, une cannelure (6) de la série complémentaire s'insérant entre deux cannelures (5a, 5b) de la série portée par l'arbre médian (5).

13. Moteur selon la revendication précédente, dans lequel l'évidement (22) central du rotor (2) est porté par une couronne (19) solidarisée au rotor (2) associé par des moyens de fixation (23) amovibles, l'évidement (22) étant prolongé par ou logeant un manchon cannelé (14).

14. Moteur selon l'une quelconque des revendications précédentes, lequel intègre des moyens électroniques de commande et de puissance à une extrémité longitudinale du carter (8), un des deux circuits externes (7) logé dans une paroi externe longitudinale du carter (8) assurant aussi un refroidissement des moyens électroniques de commande et de puissance.

## Patentansprüche

1. Motor oder elektromagnetischer Synchrongenerator mit Dauermagneten und mit axialer Strömung, umfassend wenigstens einen Rotor (2) und wenigstens einen Stator (3, 8) mit einem Gehäuse (8), wobei der wenigstens eine Rotor (2) Magnetstrukturen (11) umfasst, die Magnetpole bilden, wobei sich die Magnetstrukturen (11) vollständig um den wenigstens einen Rotor (2) erstrecken, der drehend um eine Mittelwelle (5) montiert ist, und wobei der wenigstens eine Stator (3, 8) Wicklungen (4) umfasst, wobei der Motor zwei Rotoren (2), vier Statoren (3, 8) und ein Kühlsystem (7, 7a) umfasst, das drei Kreisläufe (7, 7a) eines Kühlfluids umfasst, mit zwei äußeren Kreisläufen (7), die jeweils in einer äußeren Längswand des Gehäuses (8) aufgenommen sind, wobei sie an einen Endstator (3, 8) angrenzen, um eine Kühlung des zugehörigen Endstators (3, 8) durchzuführen, und einem Zwischenkreislauf (7a), der zwischen den zwei innersten Statoren (3, 8) des Motors angeordnet ist, wodurch eine Kühlung der zwei innersten Statoren (3, 8) gleichzeitig durchgeführt wird, wobei die Mittelwelle (5) den zwei Rotoren (2) gemeinsam ist, wobei die zwei Rotoren (2) mit der Mittelwelle (5) durch mechanische Mittel (5a, 5b, 6) verbunden sind, **dadurch gekennzeichnet, dass** jede Magnetstruktur (11) aus einer Vielzahl von Einzelmagneten (11a) besteht, wobei Abdeckscheiben (10) der Magnetstrukturen (11) axial auf jeder von zwei gegenüberliegenden axialen Flächen jedes Rotors (2) angeordnet sind, wobei die Abdeckscheiben (10) aus Verbundstoff sind, wobei die Magnetstrukturen (11) in einer äußeren Überzugsschicht aus Verbundstoff überzogen sind, welche die Außenkontur jedes der Rotoren (2) definiert, wobei die Abdeckscheiben (10) in der äußeren Überzugsschicht aus Verbundstoff überzogen oder auf einer jeweiligen axialen Fläche der äußeren Überzugsschicht platziert sind.

2. Motor nach dem vorstehenden Anspruch, wobei die Zwischenschicht (7a) in einer Zwischenwand (8a, 8b) des Gehäuses (8) aufgenommen ist, die sich radial an der gemeinsamen Mittelwelle (5) erstreckt.

3. Motor nach dem vorstehenden Anspruch, wobei die Zwischenwand (8a, 8b) zwei Abschnitte (8a, 8b) umfasst, die sich radial an der gemeinsamen Mittelwelle (5) erstrecken, wobei jeder Abschnitt (8a, 8b) jeweils mit einem der zwei innersten Statoren (3, 8) des Motors durch Mittel zur abnehmbaren Verbindung (16) fest verbunden ist.

4. Motor nach einem der vorstehenden Ansprüche, wobei die Magnetstrukturen (11), die von einem der zwei Rotoren (2) getragen werden, in einem vorbestimmten Winkel in Bezug auf die Magnetstrukturen (11), die von dem anderen Rotor (2) getragen werden, radial versetzt sind, wobei die mechanischen Mittel (5a, 5b, 6) geeignet sind, den Versatz der Magnetstrukturen (11) eines Rotors (2) in Bezug auf den anderen Rotor (2) bei der Montage der Rotoren auf der Mittelwelle (5) präzise einzustellen.

5. Motor nach einem der vorstehenden Ansprüche, wobei ein Band (9) die äußere Überzugsschicht auf ihrer äußeren Peripherie, die am weitesten von der Mittelwelle (5) entfernt ist, umgibt.

6. Motor nach einem der vorstehenden Ansprüche, wobei die Einzelmagneten (11a) von Elementarmagnetklötzen mit einem Geflecht gebildet werden, wobei die Einzelmagnete (11a) durch ein Harz, das sie trennt, verbunden sind oder jeweils in einer jeweiligen Aufnahme, die von einer der Maschen des Geflechts begrenzt ist, eingefügt sind.

7. Motor nach dem vorstehenden Anspruch, wobei das Geflecht wabenförmig ist.

8. Motor nach einem der vorstehenden Ansprüche, wobei jeder Stator (3, 8) konzentrische Wicklungen (4) umfasst, indem er eine Reihe von Zähnen (3) mit Wicklungen (4) umfasst, die um jeden Zahn gewickelt sind, wobei die Zähne (3) fest miteinander verbunden sind.

9. Motor nach dem vorstehenden Anspruch, wobei jede Wicklung (4) auf einem Zahn (3) aufliegt, indem sie wenigstens teilweise einen Wicklungshalter umgibt, wobei jeder Wicklungshalter Einrastmittel (15') umfasst oder damit verbunden ist, die mit komplementären Einrastmitteln (3') zusammenwirken, die von einem Zahn (3) getragen werden, der dem Wicklungshalter zugehörig ist, damit der Wicklungshalter mit dem zugehörigen Zahn (3) fest verbunden wird.

10. Motor nach dem vorstehenden Anspruch, wobei der Wicklungshalter einen Zwischenabschnitt (20) umfasst, auf dem die Wicklung (4) gewickelt ist, und einen ebenen Abdeckabschnitt, der sich am weitesten entfernt von dem zugehörigen Zahn (3) in Verbindungsposition des Wicklungshalters auf dem Zahn (3) befindet, indem er von dem Zahn (3) durch die Wicklung (4) und den Zwischenabschnitt (20) getrennt wird, wobei der ebene Abdeckabschnitt eine äußere Kontur aufweist, die axial beabstandet wenigstens einen äußeren Umfang gegenüber der Wicklung (4) abdeckt, und indem er gegen den äußeren Umfang der Wicklung anschlägt, wobei der Wicklungshalter einstückig ist oder nicht.

11. Motor nach einem der drei vorstehenden Ansprüche, wobei die Wicklungen (4) der Statoren (3, 8) konzentrisch sind und außerhalb des Motors in einer Klemmleiste angeschlossen sind, entweder in Reihen- oder in Parallelschaltung.

12. Motor nach einem der vorstehenden Ansprüche, wobei die Mittelwelle (5) eine Reihe von Längsrillen (5a, 5b) an der Mittelwelle (5) lokal auf jedem Abschnitt der Mittelwelle (5) trägt, die dazu bestimmt ist, jeweils einen der zwei Rotoren (2) aufzunehmen, wobei jeder Rotor (2) eine zentrale Aussparung (22) trägt, die einen Innendurchmesser aufweist, der dem Außendurchmesser der Mittelwelle (5) mit einem Spiel entspricht, das zum Einfügen der Mittelwelle (5) in die zentrale Aussparung (22) genau ausreichend ist, wobei die zentrale Aussparung (22) innen eine komplementäre Reihe von Rillen (6) trägt, die mit der Reihe von Rillen (5a, 5b) zusammenwirkt, die von der Mittelwelle (5) getragen wird, um die mechanischen Mittel (5a, 5b, 6) zu bilden, welche die zwei Rotoren (2) mit der Welle verbinden, wobei sich eine Rille (6) der komplementären Reihe zwischen zwei Rillen (5a, 5b) der Reihe einfügt, die von der Mittelwelle (5) getragen wird.

13. Motor nach dem vorstehenden Anspruch, wobei die zentrale Aussparung (22) des Rotors (2) von einem Kranz (19) getragen wird, der durch abnehmbare Befestigungsmittel (23) mit dem zugehörigen Rotor (2) fest verbunden ist, wobei die Aussparung (22) durch eine gerillte Muffe (14) verlängert wird oder diese aufnimmt.

14. Motor nach einem der vorstehenden Ansprüche, der elektronische Steuerungs- und Leistungsmittel an einem Längsende des Gehäuses (8) integriert, wobei einer der zwei äußeren Kreisläufe (7), der in einer äußeren Längswand des Gehäuses (8) aufgenommen ist, ebenfalls eine Kühlung der elektronischen Steuerungs- und Leistungsmittel sicherstellt.

## Claims

1. An axial-flux permanent-magnet synchronous electromagnetic motor or generator including at least one rotor (2) and at least one stator (3, 8) with a casing (8), said at least one rotor (2) comprising magnet structures (11) forming magnet poles, the magnet structures (11) extending all around said at least one rotor (2) rotatably mounted about a median shaft (5) and said at least one stator (3, 8) comprising windings (4), the motor including two rotors (2), four stators (3, 8) and a cooling system (7, 7a) comprising three circuits (7, 7a) of a cooling fluid, with two outer circuits (7) housed respectively within a longitudinal outer wall of the casing (8) while being adjacent to an end stator (3, 8) to perform cooling of said associated end stator (3, 8) and an intermediate circuit (7a) disposed between the two stators (3, 8) that are the innermost to the motor performing simultaneously cooling of the two innermost stators (3, 8), the median shaft (5) being common for both rotors (2), the two rotors (2) being linked to the median shaft (5) by mechanical means (5a, 5b, 6), **characterised in that** each magnet structure (11) is composed by a plurality of unitary magnets (11a), cover disks (10) of the magnet structures (11) being disposed axially on each of two opposite axial faces of each rotor (2), the cover disks (10) being made of composite, the magnet structures (11) being coated in a composite outer coating layer defining the external contour of each of the rotors (2), the cover disks (10) being coated in the composite outer coating layer or placed over a respective axial face of the outer coating layer.

2. The motor according to the preceding claim, wherein the intermediate circuit (7a) is housed within an intermediate wall (8a, 8b) of the casing (8) extending radially from the common median shaft (5).

3. The motor according to the preceding claim, wherein the intermediate wall (8a, 8b) includes two portions (8a, 8b) extending radially from the common median shaft (5), each portion (8a, 8b) being secured respectively to one of the two stators (3, 8) that is the innermost to the motor by removable securing means (16).

4. The motor according to any one of the preceding claims, wherein the magnet structures (11) carried by one of the two rotors (2) are radially shifted by a predetermined angle with respect to the magnet structures (11) carried by the other rotor (2), the mechanical means (5a, 5b, 6) being adapted to accurately adjust the shift of the magnet structures (11) of one rotor (2) with respect to the other rotor (2) during mounting of the rotors on the median shaft (5).

5. The motor according to any one of the preceding claims, wherein a hoop (9) surrounds the outer coating layer over its outer perimeter that is the furthest from the median shaft (5).

6. The motor according to any one of the preceding claims, wherein the unitary magnets (11a) consist of elementary magnet pads with a meshing, the unitary magnets (11a) being linked by a resin separating them or each being inserted into a respective housing delimited by one of the meshes of the meshing.

7. The motor according to the preceding claim, wherein the meshing is honeycomb-like shaped.

8. The motor according to any one of the preceding claims, wherein each stator (3, 8) comprises concentric windings (4) including a series of teeth (3) with windings (4) wound around each tooth, the teeth (3) being secured together.

9. The motor according to the preceding claim, wherein each winding (4) rests on a tooth (3) by surrounding at least partially a winding support, each winding support comprising or being associated to snap-fitting means (15') cooperating with complementary snap-fitting means (3') carried by one tooth (3) associated to the winding support so that the winding support is secured with the associated tooth (3).

10. The motor according to the preceding claim, wherein the winding support comprises an intermediate portion (20) in which the winding (4) is wound and a planar cover portion lying the furthest from the associated tooth (3) in the position of securing the winding support on the tooth (3) while being separated from the tooth (3) by the winding (4) and the intermediate portion (20), the planar cover portion having an outer contour axially covering at a distance at least one outer perimeter opposite the winding (4) and while abutting against the outer perimeter of the winding, the winding support being made integrally in one-piece or not.

11. The motor according to any one of the three preceding claims, wherein the windings (4) of the stators (3, 8) are concentric and are connected to the outside of the motor in a terminal block, either in series or in parallel.

12. The motor according to any one of the preceding claims, wherein the median shaft (5) carries a series of longitudinal splines (5a, 5b) onto the median shaft (5) locally over each portion of the median shaft (5) intended to respectively receive one of the two rotors (2), each rotor (2) carrying a central recess (22) having an inner diameter corresponding to the outer diameter of the median shaft (5) with a clearance that is just enough for an introduction of the median shaft (5) into the central recess (22), the central recess (22) internally carrying a complementary series of splines (6) cooperating with the series of splines (5a, 5b) carried by the median shaft (5) to form the mechanical means (5a, 5b, 6) linking the two rotors (2) to the shaft, one spline (6) of the complementary series fitting between two splines (5a, 5b) of the series carried by the median shaft (5).

13. The motor according to the preceding claim, wherein the central recess (22) of the rotor (2) is carried by a crown (19) secured to the associated rotor (2) by removable fastening means (23), the recess (22) being extended by or housing a splined sleeve (14).

14. The motor according to any one of the preceding claims, which integrates control and power electronic means at a longitudinal end of the casing (8), one of the two outer circuits (7) housed within a longitudinal outer wall of the casing (8) also ensuring cooling of the control and power electronic means.
